# EUROPÄISCHE PATENTSCHRIFT

(11) **EP 1 796 246 B1**
(45) Veröffentlichungstag und Bekanntmachung des Hinweises auf die Patenterteilung: **17.03.2010**
(21) Anmeldenummer: 05026971.1
(22) Anmeldetag: 09.12.2005
(51) Int. Cl.: H02K 11/04, H02K 9/06

(54) **Elektrische Maschine und Verfahren zur Kühlung der Elektronik einer elektrischen Maschine**
Electrical machine and method for cooling the electronic part of an electrical machine
Machine électrique et procédé de refroidissement de la partie électronique d'une machine électrique

(43) Veröffentlichungstag der Anmeldung: 13.06.2007
(73) Patentinhaber: Ziehl-Abegg AG, 74653 Künzelsau (DE)
(72) Erfinder: Knorr, Joachim, 97996 Niederstetten (DE); Egner, Uwe, 74677 Dörzbach (DE)
(74) Vertreter: Jacoby, Georg

(56) Entgegenhaltungen:
- DE-A1- 10 313 273
- US-A1- 2003 193 249
- PATENT ABSTRACTS OF JAPAN Bd. 2003, Nr. 04, 2. April 2003 (2003-04-02) -& JP 2002 354751 A (FUJITSU GENERAL LTD), 6. Dezember 2002 (2002-12-06)
- PATENT ABSTRACTS OF JAPAN Bd. 1999, Nr. 14, 22. Dezember 1999 (1999-12-22) -& JP 11 243668 A (TOSHIBA CORP), 7. September 1999 (1999-09-07)
- PATENT ABSTRACTS OF JAPAN Bd. 1998, Nr. 14, 31. Dezember 1998 (1998-12-31) -& JP 10 234158 A (TOKYO R & D:KK; SEIKO EPSON CORP), 2. September 1998 (1998-09-02)

## Beschreibung

### Gebiet der Erfindung

Die Erfindung betrifft eine elektrische Maschine und ein Verfahren zur Kühlung der Elektronik einer elektrischen Maschine.

### Hintergrund der Erfindung

Eines der Hauptprobleme beim Einsatz von elektrischen Maschinen ist ihre durch Verlustleistung in den Motor- bzw. Generatorwicklungen und der Elektronik verursachte Erwärmung im Betrieb. Vor allem, wenn die elektrische Maschine samt Elektronik - wie häufig der Fall - in einem Gehäuse eingeschlossen ist, kann die Wärme oft nur schlecht abgeführt werden; ein Wärmestau entsteht.

Die resultierende hohe Temperatur im Gehäuseinneren wirkt sich negativ auf die Elektronik aus. Beispielsweise funktionieren die in Elektromotoren häufig verwendeten Halbleiterbauelemente nur unterhalb einer bestimmten Höchsttemperatur ihrer Sperrschicht. Bei Überschreiten dieser Höchsttemperatur ist mit einem Elektronikausfall zu rechnen.

Um eine Erwärmung mit ihren negativen Auswirkungen zu vermeiden, ist eine effektive Kühlung der Elektronik vorzusehen.

Die DE 196 36 723 A1 zeigt beispielsweise eine Kühlung einer in einem Gehäuse eingekapselten Steuereinheit mit einem auf der Welle angeordneten Kühlgebläse. Die Luftführung verläuft wie folgt: Die Luft wird axial entlang der Umfangsseite eines im wesentlichen zylinderförmigen Gehäusekörpers vom Außenraum durch einen Ringspalt hindurch angesaugt, an der Gehäuseinnenseite radial nach innen geführt, durch ein zentrales Luftführungsloch in einer Luftleitplatte hindurch, danach von den Lüfterflügeln radial nach außen umgelenkt und anschließend axial in den Außenraum abgeführt.

Die EP 604 503 B1 zeigt einen auf der Motorwelle angebrachten Ventilator zum Kühlen der Motorelektronik. Die Luft wird am stirnseitigen Ende des Motors axial vom Außenraum nach innen gesaugt, nach Eintritt in den Motorinnenraum radial nach außen unterhalb der Elektronikplatine geführt, um diese herum radial nach innen und an den zu kühlenden Bauteilen auf der Platine herumgeführt und anschließend durch Bohrungen im Zentrum einer Luftleitplatte axial nach innen und am Ventilator radial nach außen aus dem Motorinnenraum herausgeführt.

Die DE 201 05 671 U1 zeigt ebenfalls eine in einem Gehäuse gegen die Kühlluft abgekapselte Motorelektronik, die im Motorinnenraum aufgenommen ist. Eine Kühlung führt den Luftstrom entlang der Außenseite des Kühlgehäuses derart vorbei, daß insbesondere Abschnitte des Gehäuses überströmt werden, an dessen Innenseite zu kühlende Bauteile der eingekapselten Motorelektronik angeordnet sind. Im übrigen zeigt auch diese Druckschrift eine Luftleitplatte, entlang der die Luft radial von außen nach innen strömt, mit einer zentralen Öffnung, durch die die Luft axial von den Lüfterflügeln angesaugt hindurchströmt.

Die EP 874 442 A2 zeigt ein Lüfterrad, das auf der Motorwelle montiert durch eine zentrale Öffnung in einer ersten Platine der Motorelektronik hindurchragt und insgesamt oberhalb der zweiten Platine angeordnet ist. Das Lüfterrad saugt Luft vom Außenraum durch dieses zentrale Loch in der ersten Platine axial nach innen, führt sie zwischen den beiden Platinen hindurch radial nach außen, um die zweite Platine herum und weiter in den Motorinnenraum hinein. Im Motorinnenraum wird zusätzlich noch die Motorwicklung gekühlt, bevor die Luft aus dem Motor austritt.

Die DE 103 13 273 A1 zeigt einen Elektromotor mit einem im Wesentlichen geschlossenen Motorgehäuse, der ein inneres Lüfterrad zur inneren Kühlung durch innere Luftverwirbelung im Bereich des Stators und/oder der Steuerelektronik aufweist.

Die JP 2002 354751 A offenbart einen elektrischen Motor, der im elektrischen Motor angeordnete Bauteile vollständig kühlt. Dafür ist ein Rotor im Inneren des Motorgehäuses angeordnet, welcher einen Luftstrom über Luftführungen direkt auf einen Kühlkörper bläst.

### Zusammenfassung der Erfindung

Vor diesem technischen Hintergrund befasst sich die Erfindung mit dem Problem, die in einem Gehäuse gegen den Außenraum abgekapselte Elektronik einer elektrischen Maschine zu kühlen, wobei der Einsatz der elektrischen Maschine auch unter ungünstigen Umgebungsbedingungen möglich sein soll.

Die Erfindung löst dieses Problem durch eine Vorrichtung bzw. ein Verfahren gemäß den unabhängigen Ansprüchen. Die abhängigen Ansprüche betreffen vorteilhafte Ausführungsformen der Erfindung.

Die Erfindungsidee umfasst eine Luftführung in einem abgeschlossenen Gehäuseinnenraum zur Kühlung der Elektronik einer elektrischen Maschine ohne Luftaustausch mit dem Außenraum.

Der Vorteil einer Luftisolierung des Innenraums gegenüber dem Außenraum liegt in dem dadurch ermöglichten Verzicht auf Luftlöcher im Gehäuse. Unter Umständen dringen durch solche Luftlöcher zusammen mit der Luft auch Staub und andere Partikel oder auch Spritzwasser etc. aus der Umgebung der elektrischen Maschine in den Motorinnenraum ein. Je nach Art und Menge der eindringenden Stoffe wird die Lebensdauer von Motor und elektronischen Bauelementen teilweise erheblich verkürzt. Eine erfindungsgemäße elektrische Maschine vermeidet diese Gefahr und ist deswegen auch in ungünstigen Umgebungssituationen einsetzbar.

Dieser Vorteil zieht jedoch eine Schwierigkeit nach sich: Es kann keine kühle Luft von außen zugeführt bzw. kein erwärmte Luft nach außen abgeführt werden. Vielmehr muss die Wärme auf eine andere Weise aus dem Gehäuseinneren heraustransportiert werden.

Die Erfindung führt einen solchen Wärmetransport aus dem Gehäuseinneren nach außen über die Gehäusewand durch. Und zwar lenkt ein vorzugsweise von der Welle der elektrischen Maschine angetriebener Lüfter einen Luftstrom zuerst an der Elektronik vorbei, so dass er deren Wärme aufnimmt, und dann zur Abkühlung an der Gehäusewand entlang. Da sich nämlich auf der anderen, äußeren Seite der Gehäusewand die nicht erwärmte Umgebungsluft befindet, hat die Gehäusewand eine niedrigere Temperatur als der Wärme abtransportierende Luftstrom im Gehäuseinneren. Das Vorbeistreichen des Luftstroms an der Gehäusewand genügt für eine Wärmeabgabe vom Luftstrom an die Gehäusewand, die wiederum von der Außenluft gekühlt wird. Vorzugsweise sind zur effektiveren Kühlung der Gehäusewand an deren Außenseite Kühlrippen oder -körper angebracht.

Als Wärmeaustauschmittel können auch Fluide mit einer höheren Wärmespeicherungsfähigkeit verwendet werden. Der einfacheren Lesbarkeit obiger Anmeldung sollen solche Fluide, wie andere Gase, Flüssigkeiten oder Gaszusammensetzungen auch von dem Begriff "Luft" umfasst sein. Ebenso umfasst der Begriff "Lüfter" alle Einrichtungen, die solche Fluide in Bewegung versetzen können.

Die Anwendung einer erfindungsgemäßen Luftzirkulation bietet sich für jede Art von elektrischer Maschine an, welche eine gegen den Außenraum abgekapselte Elektronik aufweist, z.B. für Motoren oder Generatoren verschiedenster Art, wie Drehstromssynchronmotoren, Synchronmotoren oder Gleichstrommotoren. Vor allem für elektrische Maschinen, die unter ungünstigen Umgebungsbedingungen arbeiten, ergeben sich große Vorteile.

Da der Fachmann den generellen Aufbau einer elektrischen Maschine kennt, wird im Folgenden nur der erfindungsgemäß abgeänderte Teil der elektrischen Maschine beschrieben; die anderen Bestandteile wie Rotor, Stator usw. werden als bekannt vorausgesetzt.

In den meisten Ausführungsformen ist die Elektronik in Form von elektronischen Bauelementen auf einer Platine angeordnet, die von dem Gehäuse so aufgenommen wird, dass der Luftstrom die Bauelemente überstreicht. Ist der Lüfter beispielsweise als Radiallüfter ausgeprägt, der Luft von oben ansaugt und nach außen umlenkt, kann die Platine in einem 90°-Winkel zum Lüfter angebracht sein, so dass die von oben angesaugte Luft die Bauelemente überstreicht; oder sie liegt schräg zum Lüfter im Gehäuse. Alternativ ist eine axial zum Lüfter ausgerichtete Platine vorgesehen. Dann saugt der Lüfter die sich auf der ihm abgewandten Seite der Platine befindliche Luft axial durch Luftdurchlässe in der Platine an, die so angeordnet sind, dass die Luft vorzugsweise an den wärmeempfindlichen und/oder -erzeugenden Bauelementen vorbeiströmt und deren Wärme aufnimmt. Die angesaugte Luft lenkt der Lüfter in die radiale Richtung um und wirft sie nach außen gegen die Gehäusewand. Von dort aus streicht je nach Ausführungsform ein mehr oder weniger großer Anteil der Luft die Gehäusewand entlang wieder in Richtung der Platine, wobei sie Wärme an die Gehäusewand abgibt. Bevor die Luft wieder durch die Luftdurchlässe in der Platine Richtung Lüfter strömt, überstreicht sie die Bauelemente und nimmt von ihnen erneut Wärme auf.

Für diese Luftzirkulation erlaubt die Anordnung der Platine ein Durchströmen der Luft durch einen Spalt zwischen ihr und der Gehäusewand. Alternativ weist die Platine für das Durchströmen der Luft Ausnehmungen an ihrem äußeren Rand auf. In diesem Fall kann die Platine mit der Gehäuseinnenwand bündig abschließen. Die Platine kann auch in einem Elektronikgehäuse aufgenommen sein. In dem Elektronikgehäuse können dann Luftein- und -auslasslöcher vorgesehen sein.

Andere Ausführungsformen der Erfindung verwenden andere Lüftertypen, die eine abweichende Anordnung der Platine begünstigen.

Für alle Luftführungsvarianten gilt, dass die Luft umso mehr Wärme an die Gehäusewand abgeben kann, je länger ihr Weg entlang der Gehäusewand ist, bzw. je öfter sie pro Zeiteinheit an der Gehäusewand entlang strömt. So können beispielsweise entsprechende Luftführungen an der Gehäuseinnenwand die Luft schneckenförmig oder auf anders verlaufenden Bahnen führen. Im Gegensatz zu den hier verlängerten Bahnen kann es günstig sein, die Luft innerhalb des Gehäuses, also auf ihren beiden Wegen zwischen der Elektronik und der Gehäusewand, auf kurzen Bahnen zu führen, damit hier möglichst wenig Wärme zwischen der Luft und anderen Teilen innerhalb des Gehäuses ausgetauscht wird.

Einige elektrische Maschinen benötigen mehr als eine Platine für ihre Elektronik in ihrem Gehäuse, beispielsweise um eine Messelektronik an einer bestimmten Stelle der Maschine zu platzieren. Vorzugsweise ist eine zusätzliche Platine so angeordnet, dass die erfindungsgemäße Luftführung auch für ihre Kühlung sorgt. In der oben ausführlicher beschriebenen Anordnung kann sich eine zusätzliche Platine (welche meist erheblich kleiner ist als die Hauptplatine) beispielsweise radial neben dem Lüfter befinden, so dass die vom Lüfter nach außen geworfene Luft die zusätzliche Platine überstreicht und Wärme von ihren Bauelementen aufnimmt.

Bei der erfindungsgemäßen Luftführung kommt ein Luftleitmittel zum Einsatz. Ein solches Luftleitmittel ist bevorzugt als flache Scheibe mit hochgezogenem Rand ausgeformt, in deren Mitte sich eine Luftleitdüse befindet. Diese dient zur Leitung eines Luftstroms zum Lüfterrad hin. Da die Luftleitung nur in eine Richtung erfolgt, kann eine spezifische Ausformung der Luftleitdüse zur verbesserten Luftleitung in diese Richtung vorgenommen werden.

Beispielsweise wird durch einen sich in Flussrichtung verringernden Düsendurchmesser eine Beschleunigung der Luft erreicht.

Wiederum bezogen auf das obige Beispiel ist das Luftleitmittel vorzugsweise in axialer Richtung zwischen der Platine und dem Lüfter angeordnet, und zwar so, dass zwischen Platine und Luftleitmittel ein abgeschlossener Raum entsteht, aus dem Luft nur durch Luftdurchlässe in der Platine und die Luftleitdüse einströmen bzw. entweichen kann. Saugt der Lüfter nun Luft axial an, wirkt das Luftleitmittel wie ein Trichter: da die Platine vorzugsweise in der Nähe wärmekritischer Bauelemente (oder über die gesamte Platinenfläche verteilt) Luftdurchlässe aufweist, bewegt sich die angesaugte Luft nicht in einem Strom mittig auf den Lüfter zu. Das Luftleitmittel jedoch zwingt bei einem vom Lüfter erzeugten Sog die Luft von sämtlichen Luftdurchlässen der Platine durch die Luftleitdüse und sorgt so für eine "Sammlung" der Luft und ihre Ausrichtung auf den Lüfter, der sie umso effektiver nach außen werfen kann. Weiterhin verursacht das Luftleitmittel Verwirbelungen des Luftstroms, was für eine Durchmischung und Homogenisierung der Luft sorgt.

Auch bei anderen relativen Anordnungen von Platine und Lüfter kommt das beschriebene Luftleitmittel mit demselben Zweck zum Einsatz.

Vorzugsweise ist die erfindungsgemäße Luftführung in einem Bereich des Maschinengehäuses vorgesehen, welcher von dem restlichen Maschinengehäuse abgetrennt ist. Bei den meisten Ausführungsformen (jedoch nicht notwendigerweise) handelt es sich um eine luftdichte Abtrennung, so dass nicht nur kein Austausch von Luft aus dem Maschinengehäuse mit Luft von außerhalb des Maschinengehäuses stattfindet, sondern auch kein Luftaustausch zwischen den Maschinengehäusebereichen. Meist entsteht die Abtrennung durch Bestandteile der elektrischen Maschine automatisch.

Maschinenelemente wie Rotor und Stator befinden sich bei den meisten Ausführungsformen nicht in dem Gehäusebereich mit der erfindungsgemäßen Luftführung. Vielmehr umfasst dieser Gehäusebereich außer den erfindungsspezifischen Elementen wie Lüfter und Luftleitmittel meist nur die Elektronik.

Wenn im Folgenden von "Gehäuse" die Rede ist, wird dies also in der Regel einem abgetrennten Bereich des Maschinengehäuses entsprechen.

### Kurze Beschreibung der Zeichnung

Die Erfindung wird im Folgenden anhand der Zeichnung näher erläutert. Im Einzelnen zeigen:
- Fig. 1: in einer schrägen Ansicht eine Anordnung aus Lüfter, Elektronik und Luftleitmittel gemäß einer Ausführungsform der Erfindung;
- Fig. 2: das in Fig. 1 gezeigte Luftleitmittel in einer schrägen Aufsicht;
- Fig. 3: den in Fig. 1 gezeigten Lüfter in schräger Aufsicht; und
- Fig. 4: eine Außenansicht eines Elektromotors mit der in Fig. 1 gezeigten Anordnung.

### Detaillierte Beschreibung der Zeichnung

Ein Ausführungsbeispiel einer elektrischen Maschine betrifft einen Elektromotor. Der Elektromotor ist beispielsweise ein bürstenloser permanentmagneterregter Gleichstrommotor oder ein hierzu ähnlicher bürstenloser permanentmagneterregter Wechselstrommotor. Er umfasst beispielsweise ein im wesentlichen geschlossened Motorgehäuse, das den Rotor und den Stator enthält, und ein im wesentlichen geschlossened Elektronikgehäuse, das eine Elektronik zum Steuern des Elektromotors aufnimmt. Das Elektronikgehäuse und das Motorgehäuse sind hierbei als zwei separate Gehäuseeinheiten ausgebildet. Unter dem Begriff "im wesentlichen geschlossen" wird ein Gehäuse verstanden, das im Prinzip alle Seiten der darin aufgenommenen Einheit verschließt. Selbstverständlich können in diesen Gehäusen Durchbrüche oder Öffnungen vorgesehen sein, beispielsweise zum Durchführen von entsprechenden Anschlußkabeln in das Gehäuseinnere, etc.

Die Elektronik kann jede Art von Steuerelektronik umfassen, mit der der Elektromotor gesteuert werden kann, beispielsweise dessen Drehzahl. So benötigen Gleichstrommotoren in der Regel eine Steuerelektronik zum Kommutieren der elektrischen Versorgungsströme auf die einzelnen Statorwicklungsstränge; Wechselstrommotoren benötigen eine Elektronik zum Regeln ihrer Drehzahl, etc.. Unter dem Begriff "Elektronik" wird damit jede elektronische Schaltung verstanden, die zu irgendeiner Steuerung des Elektromotors dienlich ist, nicht jedoch eine einfache Anschlußklemme, mit der die Statorwicklungen an ein externes Anschlußkabel angeschlossen werden können. Im übrigen kann die Elektronik auch in mehr als einem separaten Elektronikgehäuse untergebracht sein.

Der Elektromotor kann als Außenläufermotor mit einem glockenförmigen Rotor ausgestaltet sein. Der glockenförmige Rotor bildet bei diesem Motortyp zusammen mit einer Statorplatte das Motorgehäuse. Innerhalb dieses Motorgehäuses befindet sich der an der Statorplatte befestigte Stator. Die Statorplatte ist weist eine zentral eingelassene Buchse zur Lagerung der Motorwelle auf. Alternativ kann der Elektromotor jeglicher Art sein. Der Elektromotor kann dabei eine elektrische Verbindungsleitung aufweisen, die die Statorwicklung im Motorinneren mit der Elektronik im Elektronikgehäuse verbindet und die durch das Elektronikgehäuse geführt ist.

Der Elektromotor bzw. Außenläufermotor dient beispielsweise als Antrieb für einen Ventilator, wobei hierzu im Falle des Außenläufermotors unmittelbar am Rotor Anschlußstutzen zur Befestigung von Ventilatorflügeln vorgesehen sein können.

Die Innenform des Elektronikgehäuses kann an die Außenform der aufgenommenen Elektronik angepaßt sein, um den nachstehend beschriebenen Wärmeaustausch zwischen Elektronik und Elektronikgehäuse zu optimieren. Neben der Innenformanpassung können zusätzliche Kühlmaßnahmen für die Elektronik getroffen werden, beispielsweise im Elektronikgehäuse vorgesehene Kühlkanäle, falls erforderlich.

In einem Ausführungsbeispiel sind das Motorgehäuse und das Elektronikgehäuse als Gußteil gefertigt. Alternativ können auch andere Materialien verwendet werden.

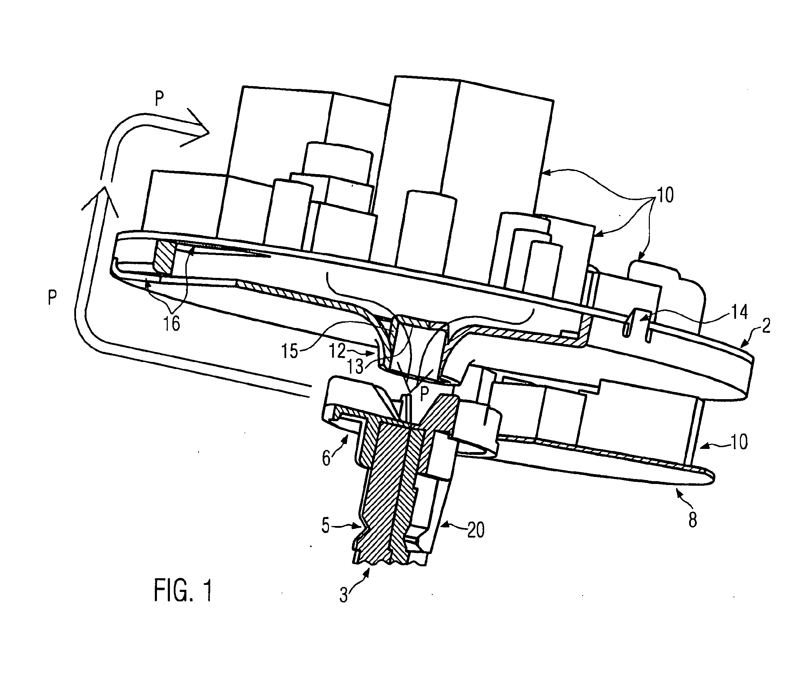

Fig. 1 zeigt die Baugruppen eines Elektromotors, die im Elektronikgehäuse untergebracht sind. Das Motorgehäuse ist in Fig. 1 nicht weiter gezeigt, lediglich das aus ihm herausgeführte unbelastete Ende einer Motorwelle 3, auf die ein Lüfter 6 aufgesetzt ist. Aufgrund dieser Kopplung mit der Welle 3 dreht sich der Lüfter 6 immer mit der aktuellen Motordrehzahl. Um den Lüfter 6 an der gewünschten Stelle im Gehäuseinneren zum Einsatz bringen zu können und um seinen festen Halt zu gewährleisten, weisen einige Ausführungsformen eine gegenüber üblichen Abmessungen verlängerte Motorwelle 3 auf.

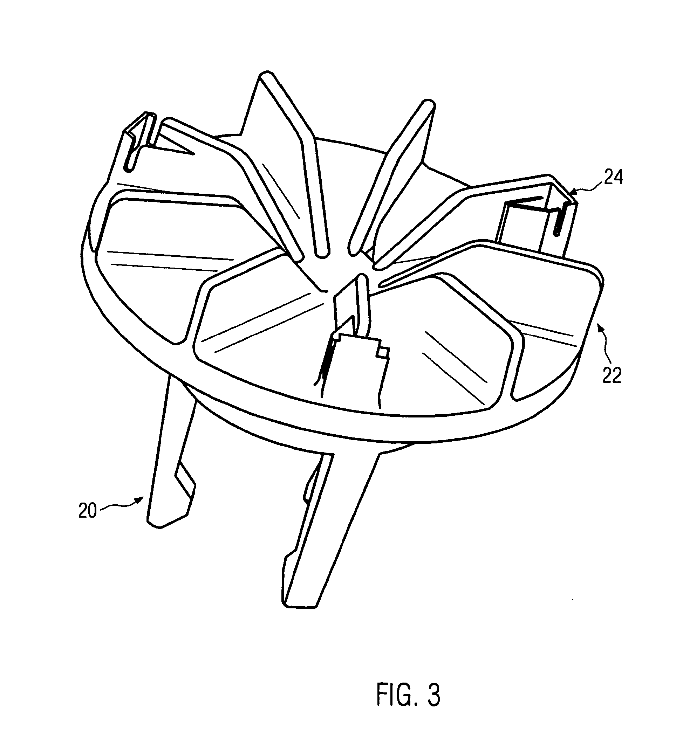

In axialer Verlängerung der Motorwelle 3 sind nach dem Lüfter 6 ein Luftleitmittel 4 und eine Platine 2 angeordnet, wobei in dieser Ausführungsform Befestigungselemente 14 das Luftleitmittel 4 an der Platine 2 befestigen. Da das Luftleitmittel 4 hochgezogene Außenränder aufweist, entsteht zwischen ihm und der Platine 2 ein Luftraum. Die darin enthaltene Luft kann durch die Luftleitdüse 12 entweichen. Für die Durchführung von Kabeln etc. von der Elektronik beispielsweise zum Rotor oder Stator sind Öffnungen 16 in der Platine 2 sowie im Luftleitmittel 4 vorgesehen. Detaillierter ist das Luftleitmittel 4 in Fig. 3 zu sehen.

Die dem Luftleitmittel 4 abgewandte Seite der Platine 2 trägt verschiedene elektronische oder mechanische Bauelemente 10, beispielsweise Widerstände, Kondensatoren, Transistoren, Relais usw.. Auch Kühlelemente wie Kühlkörper oder Kühlrippen sind an den Bauelementen 10 oder auf der Platine 2 angebracht. Bei anderen Ausführungsformen ist die Platine 2 beidseitig mit Bauelementen und Kühlkörpern 10 bestückt.

Die vorliegende Ausführungsform weist noch eine zweite, kleinere Platine 8 mit weiteren Bauelementen 10 auf, welche radial neben dem Lüfter 6 angeordnet ist. Beispielsweise befindet sich auf der zweiten Platine 8 ein Hallsensor, welcher die Drehzahl des Lüfters 6 und damit der Welle 3 messen kann, wenn ein Magnet an einer Stelle am Außenumfang des Lüfters angebracht ist.

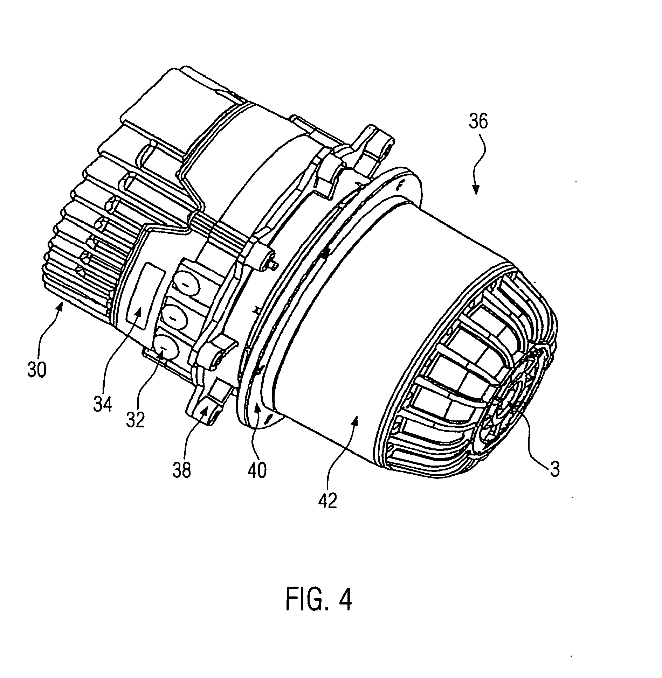

Das in Fig. 4 gezeigte Gehäuse 36 schließt die in Fig. 1 gezeigte Anordnung luftdicht ein, so dass keine Luft von außen eindringen oder von innen austreten kann. Beispielsweise wird ein Maschinengehäusebereich abgetrennt, indem ein Lager die Welle 3 direkt unterhalb des Lüfters umschließt; wie ein Topf, durch dessen Boden die Welle 3 ragt, umfasst das Gehäuse in diesem Fall die dargestellten Elemente, nicht aber andere Bestandteile der elektrischen Maschine, wie Rotor und Stator. Der Gehäusedurchmesser ist in der gezeigten Ausführungsform etwas größer als der von Luftleitmittel 4 bzw. Platine 2; dadurch kann Luft zwischen Gehäusewand und Luftleitmittel 4 bzw. Platine 2 hindurch strömen.

Bei Betrieb des Motors erzeugt der Lüfter 6 im Gehäuse eine Luftströmung. Wie Pfeil P andeutet, saugt er durch die Luftleitdüse 12 die Luft aus dem Zwischenraum zwischen Luftleitmittel 4 und Platine 2 und durch Luftdurchlässe in der Platine 2 (die in der Figur nicht zu sehen sind) Luft von oberhalb der Platine 2 an. Die angesaugte Luft lenkt er um und wirft sie radial nach außen, so dass sie bis zur Gehäusewand strömt. Dabei überstreicht und kühlt die Luft in der gezeigten Ausführungsform die zweite Platine 8. Die Pfeile P zeigen den weiteren Verlauf des Luftstroms: Um zurück auf die Oberseite der Platine 2 zu gelangen, strömt die Luft axial entlang der Gehäusewand wieder in Richtung der Platine 2. Dabei findet ein Wärmeaustausch zwischen Gehäusewand und Luft statt: da die aus einem wärmeleitenden Material (wie Aluminiumdruckguß o. dgl.) hergestellte Gehäusewand an ihrer Außenseite von kühler Außenluft umgeben und vorzugsweise noch mit Kühlrippen etc. ausgestattet ist, ist auch ihre Innenseite relativ kühl. Die Luft, die an ihr entlang strömt, hat hingegen Wärme von den elektronischen Bauelementen abgeführt und besitzt deshalb eine verhältnismäßig höhere Temperatur. Beim Entlangstreichen an der kühlen Gehäusewand kann die Luft genug Wärme an die Wand abgeben, um weiterhin eine effektive Kühlung der elektronischen Bauelemente zu gewährleisten. Die Gehäusewand transportiert die Wärme nach außen und gibt sie an die Außenluft ab.

Oberhalb der Platine 2 wird die Luft radial nach innen und durch die Luftdurchlässe in der Platine 2 und die Luftleitdüse 12 nach unten gesaugt. Vorzugsweise sind die Luftdurchlässe in der Platine 2 neben wärmekritischen Bauelementen oder deren Kühlkörpern angeordnet, um zu gewährleisten, dass ein möglichst starker Luftstrom solche Bauelemente bzw. ihre Kühlkörper überstreicht.

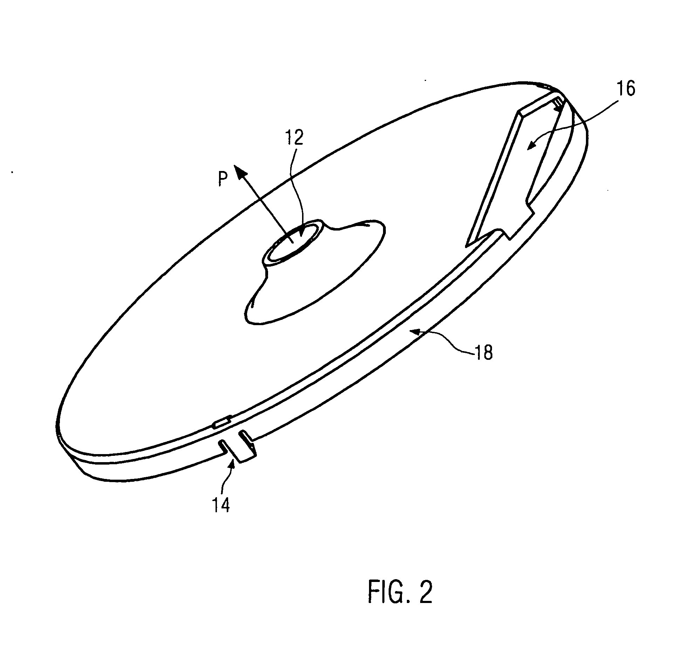

Fig. 2 stellt eine Ausführungsform des oben beschriebenen Luftleitmittels 4 detailliert und in einer schrägen Aufsicht dar.

Die Befestigungselemente 14 der gezeigten Ausführungsform erlauben eine Befestigung an der Platine 2. Sie sind beispielsweise als Haken ausgebildet, deren Unterkante waagrecht aus dem Halterücken hervorspringt und nach oben hin spitz zuläuft, so dass die Befestigung einfach vorgenommen, jedoch nach einem Einrasten unterhalb der Unterkante nur unter Aufwand gelöst werden kann. Bei anderen Ausführungsformen ist das Luftleitmittel 4 an der Gehäusewand befestigbar.

Ist das Luftleitmittel 4 an der Platine 2 befestigt, sorgt der aufgebogene Außenrand 18 des Luftleitmittels 4 für einen mehr oder weniger luftdichten Abschluss mit der Platine, so dass Luft im Wesentlichen nur durch die Luftdurchlässe in der Platine 2 oder die Luftleitdüse 12 aus dem zwischen Platine 2 und Luftleitmittel 4 gebildeten Raum ein- bzw. austritt.

Bei Betrieb des Lüfters 6 dient das Luftleitmittel einer Bündelung der an verschiedenen Stellen durch die Luftdurchlässe der Platine 2 hindurchtretenden Luftströme in einen einzigen Luftstrom in Richtung Lüfter 6. Zusätzlich verringert sich der Durchmesser der mittig angebrachten Luftleitdüse 12 in Flussrichtung der Luft (angedeutet durch Pfeil P) und beschleunigt sie dadurch zum Lüfter 6 hin. Einige Ausführungsformen weisen in Luftflussrichtung vor der Luftleitdüse 12 eine mittels mehrerer Beinchen 15 auf der Innenfläche des Luftleitmittels 12 abgestützte Prallplatte 13 auf, welche die Luft am direkten, axialen Durchfließen durch die Luftleitdüse 12 hindert. In diesem Fall strömt die Luft zwischen der Unterseite der Prallplatte 13 und der Innenfläche des Luftleitmittels 4 radial in Richtung der Öffnung der Luftleitdüse 12 zwischen den Beinchen 15 hindurch und wird axial in Richtung Lüfter 6 umgelenkt. Dies führt zu einer Verwirbelung des Luftstromes, der als homogenisierter Luftstrom aus der Luftleitdüse 12 ausströmt. Jedoch sorgen auch Ausführungsformen ohne Sperre für Verwirbelungen und dadurch eine Homogenisierung der Luft.

Die Öffnung 16 nimmt beispielsweise einen Stecker zur Verbindung der Elektronik auf der Platinenoberseite mit dem Motorinnenraum auf. Vorzugsweise schließt die Öffnung 16 luftdicht mit dem Stecker ab.

Figur 3 stellt den Lüfter 6 detaillierter dar. In der gezeigten Ausführungsform weist er neun Rotorblätter 22 auf, welche bei einer Rotation Luft axial von oben ansaugen und sie mit Druck radial nach außen fördert. Eine besondere Formanpassung der Rotorblätter 22 zur Beschleunigung des Luftstroms ist im vorliegenden Ausführungsbeispiel nicht notwendig; die von dem gezeigten Lüfter 6 erzeugte Luftströmung reicht für die effektive Kühlung der Bauelemente 10 völlig aus. Jedoch sind Ausführungsformen der Erfindung denkbar, bei denen ein in dieser oder anderer Hinsicht optimierte Lüfter zum Einsatz kommen.

Die Taschen 24 erlauben eine Aufnahme von Magneten beispielsweise zur Lage- und Drehzahlerfassung des über die Welle 3 mit dem Lüfter 6 gekoppelten Rotors der elektrischen Maschine. In diesem Fall werden z.B. Hallsensoren auf der zweiten Platine 8 angebracht, die das Magnetfeld der mit Motordrehzahl umlaufenden Magnete erfassen. In den meisten Ausführungsformen der Erfindung kommen jedoch Lüfter 6 ohne Taschen 24 zum Einsatz.

An seiner Unterseite ist der Lüfter 6 mit einer Vorrichtung versehen, welche ein Aufsetzen auf das unbelastete Ende der Motorwelle 3 erlaubt. Die drei Aufsetzbeinchen 20 umgreifen die Welle 3 von drei Seiten. Dabei passen sich die Auswölbungen der Aufsetzbeinchen 20 in eine Nut bzw. Einkerbung 5 der Welle 3 ein.

Andere Ausführungsformen von Lüftern 6 bedienen sich anderer Befestigungsarten an der Welle 3, beispielsweise eines Rings um die Welle 3. Einige Ausführungsformen koppeln den Lüfter 6 überhaupt nicht an die Welle 3, sondern sorgen für einen anderweitigen Antrieb, wie einen eigenen Antrieb.

Figur 4 zeigt schließlich eine von außen betrachtete Ausführungsform der Erfindung.

Das Motorgehäuse 36 umschließt nicht nur die in Figur 1 gezeigte Vorrichtung, sondern auch Stator, Rotor und die anderen Elemente des elektrischen Motors. Die Welle 3, welche durch eine Öffnung im Motorgehäuseboden hindurch geführt wird, kann außerhalb des Motorgehäuses mit einer Last verbunden werden, die sie antreibt. In dem in Fig. 4 dargestellten Beispiel ist der elektrische Motor ein als Ventilator ausgebildeter Außenläufermotor, dessen Rotor 42 an der Außenseite mit einem Befestigungsring 40 zum Befestigen von nicht näher dargestellten Ventilatorflügeln ausgestattet ist. Die Ventilatorflügel können ebenfalls eine Luftströmung an der Gehäuseaußenseite des Außenläufermotors, insbesondere auch an der Elektronikgehäuseaußenseite erzeugen und diese dabei effizient abkühlen. Der elektrische Motor weist einen Flanschring 38 auf, mit dem er an einem Rahmen angeflanscht werden kann.

Das Motorgehäuse 36 ist nach außen abgeschlossen; Partikel wie Staub usw. können nicht ins Innere eindringen. Die Öffnungen 32 und 34 ermöglichen eine Verbindung mit Kabeln, Steckern etc.; bei korrektem Einstecken/Verdrahten ist auch hier kein Partikeleintritt möglich.

Die Motorelektronik und damit die erfindungsgemäße Luftführung befindet sich in dem an der Außenseite mit den Kühlrippen 30 ausgestatteten Bereich des Motorgehäuses 36. Wie man sieht, sind die Kühlrippen 30 in dieser Ausführungsform sehr groß ausgelegt, was möglich ist, weil außen am Maschinengehäuse 36 kein Platzproblem besteht. Jedoch gewährleisten auch kleinere Kühlelemente eine effektive Kühlung der Gehäusewand.

Im Inneren des gezeigten Motorgehäuses 36 ist vorzugsweise eine Abtrennung eingesetzt oder durch den Motoraufbau gegeben, die zwei gegeneinander abgeschlossene Bereiche schafft bzw. das Motorgehäuse 36 in zwei Innengehäuse trennt. Dies begrenzt den Bereich, in dem die Luft wie oben erläutert zirkuliert. Vorzugsweise schließt der Bereich mit dieser Luftzirkulation Rotor, Stator usw. nicht ein, sondern nur die in Figur 1 gezeigten Elemente.

Die oben erwähnte Motorelektronik kann die gesamte Motorsteuerung umfassen oder auch nur Teile davon, wie einen Wechselrichter für die drei Phasen U, V und W, einen Prozessor für die Steuerung der Motorkommutierung, eine Treiberschaltung für den Wechselrichter, eine Erfassungsschaltung für die Zwischenkreisspannung, eine Erfassungsschaltung für den Zwischenkreisstrom, einen Gleichrichter, der beispielsweise die Wechselspannung eines dreiphasigen Versorgungsnetzes in eine Gleichspannung umwandelt, eine Zwischenkreisstabilisierung, die die vom Gleichrichter ausgegebene Zwischenkreisspannung stabilisiert, ein DC/DC-Wandler zum Liefern einer 24V und 18V Versorgungsspannung, ein Schaltregler zum Liefern einer 3,3V Versorgungsspannung für den Prozessor, etc..

## Patentansprüche

1. Elektrische Maschine, mit:
einem Gehäuse (36) mit einer Gehäusewand;
einer im Gehäuse (36) aufgenommenen Elektronik (2, 10) zur Steuerung der elektrischen Maschine, die eine Platine (2) mit darauf angeordneten Bauteilen (10) umfasst;
einem im Gehäuse (36) aufgenommenen Lüfter (6), der eine innerhalb des Gehäuses (36) geschlossene Luftzirkulation zwischen der Elektronik (2, 10) und der Gehäusewand bewirkt, bei der ein Wärmeaustausch einerseits zwischen der zirkulierenden Luft und der Gehäusewand und andererseits zwischen der zirkulierenden Luft und der Elektronik (2, 10) stattfindet;
**gekennzeichnet durch:**
ein zwischen der Platine (2) und dem Lüfter (6) angeordnetes luftleitmittel (4), das so ausgestaltet ist, dass es vom Lüfter (6) **durch** auf der Platine verteilte Luftdurchlässe angesaugte Luft sammelt und auf den Lüfter (6) ausrichtet.

2. Elektrische Maschine nach Anspruch 1, bei welcher der/die Luftdurchlässe in der Platine (2) in der Nähe thermisch kritischer Bauteile (10) angeordnet sind.

3. Elektrische Maschine nach Anspruch 1 oder 2, bei welcher der Lüfter (6) so ausgestaltet und bezüglich der Platine (2) angeordnet ist, dass er die Luft von der dem Lüfter (6) abgewandten Seite der Platine (2) durch den bzw. die Luftdurchlässe in der Platine (2) hindurch, nach außen gegen die Gehäusewand, und entlang der Gehäusewand zurück auf die dem Lüfter (6) abgewandte Seite der Platine (2) fördert.

4. Elektrische Maschine nach einem der vorangehenden Ansprüche, bei der das Luftleitmittel (4) eine auf den Lüfter (6) ausgerichtete Luftleitdüse (12) umfasst.

5. Elektrische Maschine nach Anspruch 4, bei der das Luftleitmittel (4) so an der Platine (2) befestigt ist, dass die vom Lüfter (6) angesaugte Luft von der dem Lüfter (6) abgewandten Platinenseite durch die Luftdurchlässe der Platine (2) in den Zwischenraum zwischen Platine (2) und Luftleitmittel (4) und von dort durch die Luftleitdüse (12) des Luftleitmittels (4) zum Lüfter (6) strömt.

6. Elektrische Maschine nach einem der vorangehenden Ansprüche, bei der die Platine (2) so im Gehäuse (36) aufgenommen ist, dass entlang des Platinenrandes ein Spalt zwischen der Gehäusewand und dem Platinenrand vorliegt, so dass die entlang der Gehäusewand strömende Luft durch den Spalt auf die dem Lüfter (6) abgewandte Seite der Platine (2) strömt.

7. Elektrische Maschine nach einem der vorangehenden Ansprüche, bei der das Gehäuse (36) in separate Gehäuseabschnitte unterteilt ist, von denen der eine Gehäuseabschnitt die Elektronik (2, 10) und den Lüfter (6) aufnimmt und der andere Gehäuseabschnitt den Generator bzw. Motor aufnimmt.

8. Elektrische Maschine nach einem der vorangehenden Ansprüche, bei welcher für wenigstens einige Bauteile (10) der Platine (2) Kühlkörper (10) vorgesehen sind.

9. Elektrische Maschine nach Anspruch 8, bei welcher die Luftdurchlässe in der Platine (2) so verteilt sind, dass die Luft an den Kühlkörpern (10) vorbeiströmt.

10. Elektrische Maschine nach einem der vorangehenden Ansprüche, bei welcher im Bereich der Außenseite der Gehäusewand, an dem der Luftstrom entlang strömt, ein oder mehrere Kühlkörper (30) angeordnet sind.

11. Elektrische Maschine nach einem der vorangehenden Ansprüche, welche eine oder mehrere zusätzliche Platinen (8) umfasst.

12. Elektrische Maschine nach Anspruch 11, bei welcher die zusätzliche Platine (8) so angeordnet ist, dass der vom Lüfter (6) radial nach außen geleitete Luftstrom sie überstreicht.

13. Elektrische Maschine nach einem der vorangehenden Ansprüche, bei welcher der Lüfter (6) mit einer angetriebenen Welle (3) der elektrischen Maschine gekoppelt ist.

14. Elektrische Maschine nach Anspruch 14, bei welcher der Lüfter (6) auf das unbelastete Ende der Welle (3) aufgesetzt ist.

15. Verfahren zum Kühlen einer Elektronik (2, 10) zum Steuern einer elektrischen Maschine, wobei die Elektronik (2, 10) innerhalb eines Gehäuses (36) der elektrischen Maschine aufgenommen ist und eine Platine (2) mit darauf angeordneten Bauteilen (10) umfasst, bei dem Luft mittels eines im Gehäuse (36) aufgenommenen Lüfters (6) zwischen der Elektronik (2, 10) und der Gehäusewand so innerhalb des Gehäuses (36) geschlossen zirkuliert wird, dass ein Wärmeaustausch einerseits zwischen der zirkulierenden Luft und der Gehäusewand und andererseits zwischen der zirkulierenden Luft und der Elektronik (2, 10) stattfindet,
**dadurch gekennzeichnet, dass** ein zwischen der Platine (2) und dem Lüfter (6) angeordnetes Luftleitmittel (4) die vom Lüfter (6) durch auf der Platine (2) verteilte Luftdurchlässe angesaugte Luft sammelt und auf den Lüfter (6) ausrichtet.

16. Verfahren nach Anspruch 15, bei dem die Luft von der dem Lüfter (6) abgewandten Seite der Platine (2) durch Luftdurchlässe in der Platine (2) hindurch nach außen gegen die Gehäusewand, und entlang der Gehäusewand zurück auf die dem Lüfter (6) abgewandte Seite der Platine (2) zirkuliert wird.

17. Verfahren nach Anspruch 16, bei dem die vom Lüfter (6) durch die Luftdurchlässe der Platine (2) angesaugte Luft durch eine Luftleitdüse (12) hindurch, die in dem zwischen der Platine (2) und dem Lüfter (6) angeordneten Luftleitmittel (4) vorgesehen ist, in Richtung Lüfter (6) beschleunigt wird.

18. Verfahren nach Anspruch 17, bei dem die durch die Luftleitdüse (12) hindurch strömende Luft verwirbelt wird.

## Claims

1. Electrical machine, comprising:
a housing (36) with a housing wall;
electronics (2, 10) accommodated in the housing (36) for controlling the electrical machine, said electronics comprising a printed circuit board (2) with components (10) arranged thereon;
a fan (6) which is accommodated in the housing (36) and which brings about a closed air circulation within the housing (36) between the electronics (2, 10) and the housing wall, in which a heat exchange takes place on the one hand between the circulating air and the housing wall and on the other hand between the circulating air and the electronics (2, 10);
**characterised by**:
an air directing means (4) which is arranged between the printed circuit board (2) and the fan (6) and which is configured in such a way that it gathers air sucked by the fan (6) through air openings distributed on the printed circuit board and orients said air towards the fan (6).

2. Electrical machine according to claim 1, in which the air opening(s) in the printed circuit board (2) are arranged in the vicinity of thermally critical components (10).

3. Electrical machine according to claim 1 or 2, in which the fan (6) is configured and arranged relative to the printed circuit board (2) in such a way that it conveys the air from the side of the printed circuit board (2) remote from the fan (6), through the air opening (s) in the printer circuit board (2), out towards the housing wall, and along the housing wall back to the side of the printed circuit board (2) remote from the fan (6).

4. Electrical machine according to one of the preceding claims, in which the air directing means (4) comprises an air directing nozzle (12) oriented towards the fan (6).

5. Electrical machine according to claim 4, in which the air directing means (4) is attached to the printed circuit board (2) in such a way that the air sucked by the fan (6) flows from the side of the printed circuit board remote from the fan (6), through the air openings of the printed circuit board (2) into the intermediate space between the printed circuit board (2) and the air directing means (4), and from there through the air directing nozzle (12) of the air directing means (4) towards the fan (6).

6. Electrical machine according to one of the preceding claims, in which the printed circuit board (2) is accommodated in the housing (36) in such a way that along the printed circuit board edge there is a gap between the housing wall and the printed circuit board edge, so that the air flowing along the housing wall flows through the gap towards the side of the printed circuit board (2) remote from the fan (6).

7. Electrical machine according to one of the preceding claims, in which the housing (36) is divided into separate housing sections, of which one housing section accommodates the electronics (2, 10) and the fan (6) and the other housing section accommodates the generator and/or motor.

8. Electrical machine according to one of the preceding claims, in which cooling elements (10) are provided for at least some components (10) of the printed circuit board (2).

9. Electrical machine according to claim 8, in which the air openings in the printed circuit board (2) are distributed in such a way that the air flows past the cooling elements (10).

10. Electrical machine according to one of the preceding claims, in which one or more cooling elements (30) are arranged in the region of the outer side of the housing wall, along which the air stream flows.

11. Electrical machine according to one of the preceding claims, which comprises one or more additional printed circuit boards (8).

12. Electrical machine according to claim 11, in which the additional printed circuit board (8) is arranged in such a way that the air stream directed radially outwards by the fan (6) flows over it.

13. Electrical machine according to one of the preceding claims, in which the fan (6) is coupled to a driven shaft (3) of the electrical machine.

14. Electrical machine according to claim 14, in which the fan (6) is attached to the non-loaded end of the shaft (3).

15. Method for cooling electronics (2, 10) for controlling an electrical machine, wherein the electronics (2, 10) are accommodated within a housing (36) of the electrical machine and comprise a printed circuit board (2) with components (10) arranged thereon, in which, by means of a fan (6) accommodated in the housing (36), air is circulated in a closed manner between the electronics (2, 10) and the housing wall within the housing (36) in such a way that a heat exchange takes place on the one hand between the circulating air and the housing wall and on the other hand between the circulating air and the electronics (2, 10),
**characterised in that** an air directing means (4) which is arranged between the printed circuit board (2) and the fan (6) gathers the air sucked by the fan (6) through air openings distributed on the printed circuit board (2) and orients said air towards the fan (6).

16. Method according to claim 15, in which the air is circulated from the side of the printed circuit board (2) remote from the fan (6), through air openings in the printed circuit board (2), out towards the housing wall, and along the housing wall back to the side of the printed circuit board (2) remote from the fan (6).

17. Method according to claim 16, in which the air sucked by the fan (6) through the air openings of the printed circuit board (2) is accelerated towards the fan (6) through an air directing nozzle (12) which is provided in the air directing means (4) arranged between the printed circuit board (2) and the fan (6).

18. Method according to claim 17, in which the air flowing through the air directing nozzle (12) is swirled.

## Revendications

1. Machine électrique, comportant :
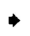 un carter (36) avec une paroi ;
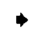 un système électronique (2, 10) pour la commande de la machine électrique, lequel est logé dans le carter (36) et comporte une platine (2) sur laquelle sont montés des composants (10) ;
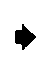 un ventilateur (6), qui est logé dans le carter (36) et induit entre le système électronique (2, 10) et la paroi du carter une circulation d'air fermée à l'intérieur du carter (36), pendant laquelle se produit un échange thermique, d'une part, entre l'air circulant et la paroi du carter et, d'autre part, entre l'air circulant et le système électronique (2, 10) ;
**caractérisé par** un moyen de guidage d'air (4), qui est monté entre la platine (2) et le ventilateur (6) et qui est configuré de telle sorte qu'il rassemble l'air aspiré par le ventilateur (6) à travers les passages d'air répartis sur la platine et le dirige vers le ventilateur (6).

2. Machine électrique selon la revendication 1, dans laquelle le/les passage(s) d'air dans la platine (2) sont disposés à proximité des composants (10) critiques sur le plan thermique.

3. Machine électrique selon la revendication 1 ou 2, dans laquelle le ventilateur (6) est configuré et disposé par rapport à la platine (2) de telle sorte qu'il transporte l'air depuis le côté de la platine (2), opposé au ventilateur (6), à travers le ou les passages d'air dans la platine (2), vers l'extérieur contre la paroi du carter, et en retour le long de la paroi du carter vers le côté de la platine (2), opposé au ventilateur (6).

4. Machine électrique selon l'une quelconque des revendications précédentes, dans laquelle le moyen de guidage d'air (4) comporte une buse de guidage d'air (12) dirigée vers le ventilateur (6).

5. Machine électrique selon la revendication 4, dans laquelle le moyen de guidage d'air (4) est fixé sur la platine (2), de telle sorte que l'air aspiré par le ventilateur (6) circule depuis le côté de la platine opposé au ventilateur (6) à travers les passages d'air de la platine (2) vers l'espace entre la platine (2) et le moyen de guidage d'air (4) et, à partir de là, à travers la buse de guidage d'air (12) du moyen de guidage d'air (4) vers le ventilateur (6).

6. Machine électrique selon l'une quelconque des revendications précédentes, dans laquelle la platine (2) est logée dans le carter (36) de telle sorte qu'il existe le long du bord de la platine une fente entre la paroi du carter et le bord de la platine, de telle sorte que l'air circulant le long de la paroi du carter afflue à travers la fente en direction du côté de la platine (2), opposé au ventilateur (6).

7. Machine électrique selon l'une quelconque des revendications précédentes, dans laquelle le carter (36) est divisé en parties séparées, dont l'une des parties reçoit le système électronique (2, 10) et le ventilateur (6), et l'autre partie reçoit le générateur ou moteur.

8. Machine électrique selon l'une quelconque des revendications précédentes, dans laquelle des corps de refroidissement (10) sont prévus pour au moins certains composants (10) de la platine (2).

9. Machine électrique selon la revendication 8, dans laquelle les passages d'air sont répartis dans la platine (2) de telle sorte que l'air circule le long des corps de refroidissement (10).

10. Machine électrique selon l'une quelconque des revendications précédentes, dans laquelle un ou plusieurs corps de refroidissement (30) sont disposés dans la zone de la face extérieure de la paroi du carter, le long de laquelle circule le flux d'air.

11. Machine électrique selon l'une quelconque des revendications précédentes, qui comporte une ou plusieurs platines (8) supplémentaires.

12. Machine électrique selon la revendication 11, dans laquelle la platine (8) supplémentaire est disposée de telle sorte qu'elle est balayée par le flux d'air dirigé radialement vers l'extérieur par le ventilateur (6).

13. Machine électrique selon l'une quelconque des revendications précédentes, dans laquelle le ventilateur (6) est couplé à un arbre (3) entraîné de la machine électrique.

14. Machine électrique selon la revendication 14, dans laquelle le ventilateur (6) est posé sur l'extrémité non sollicitée de l'arbre (3).

15. Procédé pour le refroidissement d'un système électronique (2, 10) destiné à la commande d'une machine électrique, ledit système électronique (2, 10) étant logé à l'intérieur d'un carter (36) de la machine électrique et comportant une platine (2) sur laquelle sont montés des composants (10), dans lequel procédé l'air, au moyen d'un ventilateur (6) logé dans le carter (36), est mis en circulation fermée à l'intérieur du carter (36) entre le système électronique (2, 10) et la paroi du carter, de telle sorte qu'il se produit un échange thermique, d'une part, entre l'air circulant et la paroi du carter et, d'autre part, entre l'air circulant et le système électronique (2, 10), **caractérisé en ce qu'**un moyen de guidage d'air (4), monté entre la platine (2) et le ventilateur (6), rassemble l'air aspiré par le ventilateur (6) à travers les passages d'air répartis sur la platine (2) et le dirige vers le ventilateur (6).

16. Procédé selon la revendication 15, dans lequel l'air est mis en circulation depuis le côté de la platine (2), opposé au ventilateur (6), à travers les passages d'air dans la platine (2) vers l'extérieur contre la paroi du carter, et en retour le long de la paroi du carter vers le côté de la platine (2), opposé au ventilateur (6).

17. Procédé selon la revendication 16, dans lequel l'air aspiré par le ventilateur (6) à travers les passages d'air de la platine (2) est accéléré en direction du ventilateur (6) sous l'effet de son passage à travers une buse de guidage d'air (12), qui est prévue dans le moyen de guidage d'air (4) monté entre la platine (2) et le ventilateur (6).

18. Procédé selon la revendication 17, dans lequel l'air affluant à travers la buse de guidage d'air (12) est mis en tourbillon.
